Europäisches Patentamt

European Patent Office

Office européen des brevets

(19)

(11) Veröffentlichungsnummer: **0 041 282**
**B1**

# (12) EUROPÄISCHE PATENTSCHRIFT

(45) Veröffentlichungstag der Patentschrift:
**12.08.87**

(21) Anmeldenummer: **81200469.5**

(22) Anmeldetag: **01.05.81**

(51) Int. Cl.⁴: **B 62 D  53/02, E 21 F  13/00, E 21 F  15/00, B 60 P  1/00**

(54) Untertagefahrzeug für das Einbringen von Versatzmaterial.

(30) Priorität: **29.05.80  DE 8014357 U**

(43) Veröffentlichungstag der Anmeldung:
**09.12.81 Patentblatt 81/49**

(45) Bekanntmachung des Hinweises auf die Patenterteilung:
**12.08.87 Patentblatt 87/33**

(84) Benannte Vertragsstaaten:
**AT CH DE FR IT LI SE**

(56) Entgegenhaltungen:
**DE-A-1 480 552
DE-A-1 555 779
DE-A-2 735 620
FR-A-2 151 147
US-A-3 682 333
US-A-4 011 957
US-A-4 072 272
US-A-4 090 627**

(73) Patentinhaber: **METALLGESELLSCHAFT AG,
Reuterweg 14 Postfach 3724, D-6000 Frankfurt/M.1
(DE)**

(72) Erfinder: **Walkenbach, Franz, Ing.- grad., Am
Strumberg 1, D-5940 Lennestadt 17 (DE)**
Erfinder: **Kleckel, Hans B., Dipl.- Ing., Heinrich-
Heine- Strasse 12, D-5940 Lennestadt 17 (DE)**

(74) Vertreter: **Rieger, Harald, Dr., Reuterweg 14,
D-6000 Frankfurt am Main (DE)**

LIBER, STOCKHOLM 1987

## Beschreibung

Die Erfindung betrifft ein Untertagefahrzeug für das Einbringen von insbesondere Betonversatzmaterial, mit einem zweirädrigen Zugteil und einem damit über Knicklenkung verbundenen, eine Mulde tragenden zweirädrigen Lastteil.

Es ist bekannt, im Bergbau bei einem fast 100 %igem Abbau in der flachen Lagerung (Kammer-Pfeiler-Bau) zur Stützung des Hangenden Versatzmaterial in die Kammern einzubringen. In vielen Fällen hat es sich als äußerst schwierig erwiesen, das ein Bindemittel, wie Zement, enthaltende Versatzmaterial aus Zerkleinerungsbergen oder ähnlichem Gesteinsmaterial zum Verfüllen der Kammern in den Abbaubereich einzubringen. Üblicherweise erfolgt das Einbringen des Versatzmaterials durch Einspülen oder Einblasen über Rohrleitungen. Für manche Grube ist diese Vorgehensweise sehr aufwendig hinsichtlich Bedienungspersonal, Material und Kosten. Im Grubenbetrieb ist es des weiteren bekannt, zweiteilige Untertage-Fahrzeuge mit einem zweirädrigen Motorzugteil und einem damit über Knicklenkung verbundenen Lastteil für die verschiedensten Zwecke einzusetzen. Bei geringen Abbauquerschnitten in geringmächtigen Lagerstätten besteht jedoch nicht die Möglichkeit, das Versatzmaterial mit zweiteiligen Hinterkipper-Fahrzeugen zu transportieren, da diese eine große Auskipphöhe benötigen und auch nicht die Möglichkeit schaffen, das Versatzmaterial unter das Hangende zu bringen.

Es ist ein zweiteiliges Selbstlade-Transportfahrzeug bekannt, das einen zweirädrigen Motorzugteil und einen damit mittels eines Knickgelenkes verbundenen Kübelteil besitzt sowie eine am Kübelende vorgesehene, über Kopf ladende Ladeschaufel. Um den beschränkten Schwenkbereich der Ladeschaufel zu kompensieren, ist bei dem bekannten Selbstlade-Transportfahrzeug ein dreiteilig ausgebildeter Ladekübel vorgesehen, bei dem ein innerer Kübelteil und ein über Hydraulikzylinder bewegter Schild relativ zum äußeren Kübelteil verschiebbar angeordnet sind. Mit der Schildverschiebung wird die Entladung des Kübels über das hintere offene Ende bewirkt (DE-U-19 85 281). Aus DE-A-27 35 620 ist ein zylindrischer, gegebenenfalls verfahrbarer, geschlossener, waagerecht angeordneter Vorratsbehälter für fluidisierbares pulver- oder granulatförmiges Gut bekannt. Soweit ein verfahrbarer Vorratsbehälter angesprochen ist, handelt es sich um ein Übertagetransportfahrzeug, wie Straßentransportfahrzeug, dessen zylindrischer Behälter einen im Inneren in Längsachse geführten Schiebeschild besitzt. Dieser Schild schiebt das Material in Granulat- oder Pulverform zu einem in Richtung der Längsachse mittels Preßluft entleerbaren Bodenstutzen. Das aus US-A-2 754 015 vorbekannte Fahrzeug für den Abtransport bzw. die Beförderung von abgebautem losem Bergbaumaterial in Untertagebetrieben wird in Verbindung mit anderen Fahrzeugen, z.B. Ladefahrzeugen, betrieben. Das vorbekannte Fahrzeug ist kein über Knickgelenk in einen Motorteil und einen Lastteil geteiltes Fahrzeug und besitzt ein als Plattenband ausgebildetes Förderband, das sich Praktisch über die gesamte Längsachse des Fahrzeugs erstreckt.

Der Erfindung liegt die Aufgabe zugrunde, das Einbringen von Versatzmaterial, insbesondere Betonversatzmaterial, untertage mit gut manövrierfähigen Fahrzeugen und einfach zu bedienenden Einrichtungen sowie mit möglichst wenig Bedienungspersonal vorzunehmen.

Hierzu sieht die Erfindung gemäß dem Oberbegriff des Anspruchs 1 ein zweiteiliges Untertage-Transportfahrzeug vor, insbesondere für Transport und Einbringen von bindemittelhaltigem Versatzmaterial in Hohlräume bei geringem Abbauquerschnitt, mit zweirädrigem Motorzugteil (1) und einem damit über Knickgelenk verbundenen zweirädrigen, eine Mulde (3) tragenden Lastteil (2), dessen Mulde einen mit Hydraulikzylinder betriebenen Schiebeschild sowie eine Entleerungseinrichtung aufweist. Ein solcher Fahrzeug ist in DE-U- 19 85 281 beschrieben. Das erfindungsgemäße selbstfahrende, zweiteilige Nutzfahrzeug für das Einbringen von Versatzmaterial im Untertageabbau (z.B. Kammer-Pfeiler-Bau) ist gekennzeichnet durch

a) eine Mulde (3) mit im hinteren Ende des Muldenbodens vorgesehenem Entleerungtrichter (11) mit darunter angebrachter, mit separatem Motor (8) angetriebener, höhenverstellbarer Versatzschleuder (9) sowie einem mittels Teleskophydraulikzylinder (5) betriebenen und in Profilen (12) der Muldenlängswände geführten Schiebeschild (4),

b) auf dem Motorzugteil (1) angeordneten Elektromotor (6) mit angeflanschter Hydraulikpumpe (7) für den Antrieb des Teleskophydraulikzylinders (5) sowie Schaltstation (10) zur Steuerung des Elektromotors (6).

In weiterer Ausbildung des erfindungsgemäßen Untertage-Transportfahrzeugs ist auf dem Lastteil 2 über der Versatzschleuder 9 ein Schaltpult 13 angeordnet.

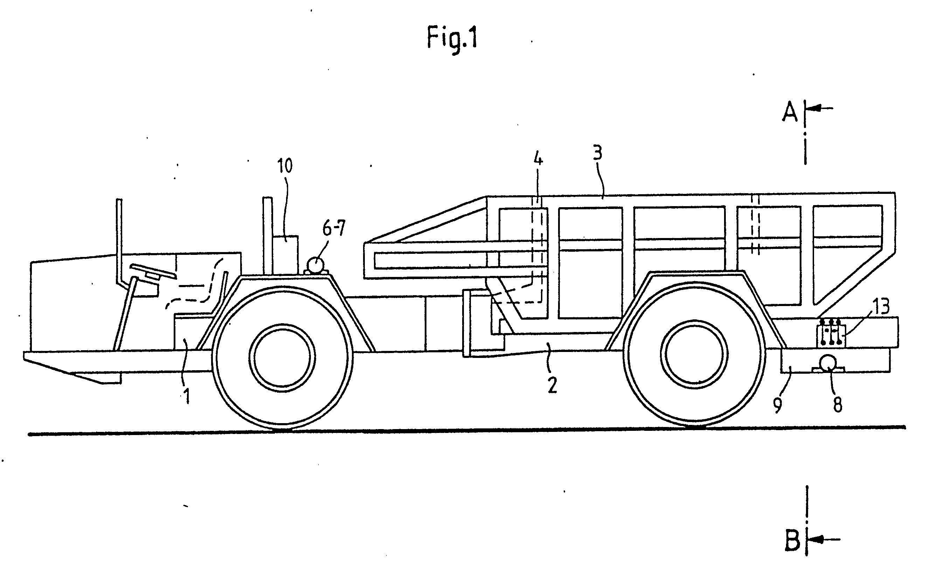

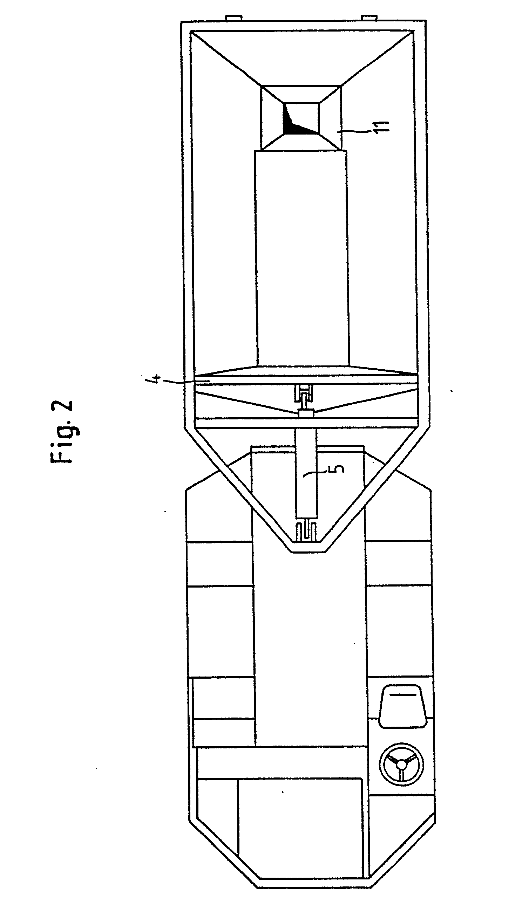

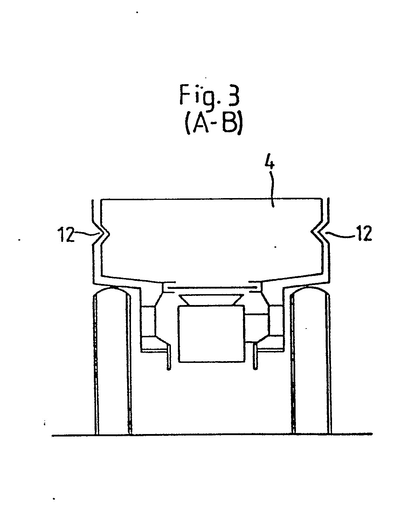

Das erfindungsgemäße Untertage-Transportfahrzeug wird anhand der Figuren 1 bis 3 und an einer beispielhaften Ausführungsform näher erläutert.

Es stellen dar:
Fig. 1 eine schematische Seitenansicht,
Fig. 2 eine Draufsicht,
Fig. 3 einen Schnitt entlang der Linie A-B.
Wie aus den Figuren zu entnehmen ist, besteht das Fahrzeug aus einem mit Verbrennungsmotor angetriebenen zweirädrigen Motorzugteil 1 und einem damit über Knicklenkung verbundenen zweirädrigen Lastteil 2. Der Lastteil 2 trägt die Mulde 3 zum Transport von Versatzmaterial. In der Mulde 3 befindet sich der Schiebeschild 4 zum Entleeren. Der Schiebeschild 4 wird über einen doppelwirkenden Teleskophydraulikzylinder 5 in Richtung des Entleerungstrichters 11 bewegt. Der Antrieb für den Teleskophydraulikzylinder 5 erfolgt über einen Elektromotor 6, der eine Hydraulikpumpe 7 antreibt. Der Elektromotor 6 wird aus dem Netz vor Ort gespeist. Die Schaltung des Elektromotors 6 erfolgt über die Schaltstation 10 auf dem Motorzugteil 1. Die höhenverstellbare Versatzschleuder 9 an sich bekannter Bauart ist unmittelbar unter der Öffnung des Entleerungstrichters 11 angeordnet und wird über den separaten Motor 8 angetrieben. Über der Versatzschleuder 9 ist das Schaltpult 13 angebracht. Auf den inneren Seitenwänden der Mulde 3 dienen Profile 12 zur Führung des Schiebeschildes 4.

Bei Versatzschleudern an sich bekannter Bauart wird das Material auf ein mit Motor angetriebenes endloses Band gegeben. Eine Trommel dient als eine Art Andruckrolle und wird über das Band angetrieben. Auf dem Trommelkörper sind geeignet geformte Mitnehmer angebracht, die das abzuschleudernde Material bei entsprechender Bandgeschwindigkeit in die gewünschte Richtung und Entfernung wegschleudern.

Für den untertägigen Einsatz des erfindungsgemäßen Transportfahrzeugs ist folgende Arbeitsweise als Sicherheitseinrichtung vorgesehen.

Wenn Netzspannung an das Fahrzeug angelegt wird, schaltet der Dieselmotor durch Zurücknahme der Einspritzpumpe auf Null. Erst dann kann der Arbeitsvorgang beginnen. Der Schiebeschild 4 schiebt das Material in der Mulde 3 im entsprechenden Verhältnis zum zu verschleudernden Material in den Entleerungstrichter 11. Der Schiebeschild 4 wird durch zwei verschleißarme Profile (z.B. Winkeleisen 12), die an den inneren Seitenwänden der Mulde 3 angebracht sind, geführt. Nach beendetem Entleeren wird das Schiebestück 4 mittels des Teleskophydraulikzylinders 5 in die Ausgangsstellung zurückgezogen. Gleichzeitig kommt die Versatzschleuder 9 zum Stillstand. Die Leistungssteuerung des Schiebeschildes 4 und der höhenverstellbaren Versatzschleuder 9 erfolgt seitlich neben der Schleuder mittels des Schaltpultes 13.

Der Vorteil des erfindungsgemäßen Untertagefahrzeuges für das Einbringen von Versatzmaterial besteht darin, daß ein von stationären Versorgungseinrichtungen weitgehend unabhängiges Kompaktgerät mit Eigenantrieb zur Verfügung gestellt ist, das die Funktion von bisher mehreren Aggregaten und Zuleitungen in einer einzigen fahrbaren Vorrichtung in sich vereint. Darüberhinaus wird ein rascher und sehr sicherer Abbau auch an schwer zugänglichen und in den Abmaßen gering gehaltenen Betriebsorten untertage in wirtschaftlicher Weise ermöglicht, sowie durch das nach beiden Seiten schwenkbare Knickgelenk die Schleuderbreite bzw. abgedeckte Fläche variabel und den örtlichen Gegebenheiten anpassungsfähig gehalten.

**Patentansprüche**

1. Zweiteiliges Untertage-Transportfahrzeug, insbesondere für Transport und Einbringen von bindemittelhaltigem Versatzmaterial in Hohlräume bei geringem Abbauquerschnitt, mit zweirädrigem Motorzugteil (1) und einem damit über Knickgelenk verbundenen zweirädrigen, eine Mulde (3) tragenden Lastteil (2), dessen Mulde einen mit Hydraulikzylinder betriebenen Schiebeschild sowie eine Entleerungseinrichtung aufweist, gekennzeichnet durch

a) eine Mulde (3) mit im hinteren Ende des Muldenbodens vorgesehenem Entleerungstrichter (11) mit darunter angebrachter, mit separatem Motor (8) angetriebener, höhenverstellbarer Versatzschleuder (9) sowie einem mittels Teleskophydraulikzylinder (5) betriebenen und in Profilen (12) der Muldenlängswände geführten Schiebeschild (4),

b) auf dem Motorzugteil (1) angeordneten Elektromotor (6) mit angeflanschter Hydraulikpumpe (7) für den Antrieb des Teleskophydraulikzylinders (5) sowie Schaltstation (10) zur Steuerung des Elektromotors (6).

2. Zweiteiliges Untertage-Transportfahrzeug nach Anspruch 1, gekennzeichnet durch ein auf dem Lastteil (2) über der höhenverstellbaren Versatzschleuder (9) angeordnetes Schaltpult (13).

**Claims**

1. A two-part underground transport vehicle, particularly for transporting and introducing binder-containing filling material into cavities having a small stope cross-section, comprising a two-wheeled powered tractor part (1) and a load-carrying part (2), which is connected to the tractor part by a hinge and carries a trough (3), which is provided with a pusher shield that is operated by a hydraulic zylinder, and an emptying device, characterized by

a) a trough (3) which is provided with an emptying funnel (11) is in the rear end of the trough bottom, with a vertically adjustable centrifugal filling thrower (9) which is mounted under the funnel and driven by a separate motor (8), and with a pusher shield (4), which is operated by a telescopic hydraulic cylinder (5) and guided in profiled portions (12) of the longitudinal walls of the trough,

b) an electric motor (6), which is provided on the powered tractor part (1), a hydraulic pump (7), which is flanged to the electric motor and serves to drive the telescopic hydraulic cylinder (5), and a switching station (10) for controlling the electric motor (6).

2. A two-part underground transport vehicle according to claim 1, characterized by a control console (13), which is provided on the load-carrying part (2) over the vertically adjustable filling thrower (9).

## Revendications

1. Véhicule de transport minier en deux parties, notamment pour le transport et la mise en place de remblais contenant un liant dans les cavités, dans le cas d'une faible section transversale d'abattage comportant une partie formant tracteur à deux roues (1) et une partie de charge à deux roues (2) reliée à la partie formant tracteur par l'intermédiaire d'une articulation pivotante et portant une benne (3), qui possède un bouclier mobile entraîné par un vérin hydraulique ainsi qu'un dispositif de vidage, caractérisé par

a) une benne (3) comportant une trémie de vidage (11) prévue sur l'extrémité arrière du fond de la benne et comportant à sa partie inférieure, un dispositif de remblayage à projection (9) réglable en hauteur et entraîné par un moteur séparé (8), ainsi qu'un bouclier mobile (4) entraîné au moyen d'un vérin hydraulique télescopique (5) et guidé dans des éléments profilés (12) des parois longitudinales de la benne,

b) un moteur électrique (6) disposé sur la partie formant tracteur (1) et comportant une pompe hydraulique (7) raccordée par brides et utilisée pour l'entraînement du vérin hydraulique télescopique (5) ainsi qu'un poste de commande (10) permettant la commande du moteur électrique (6).

2. Véhicule de transport minier en deux parties, suivant la revendication 1, caractérisé par un pupitre de commande (13) disposé sur la partie de charge (2) au-dessus du dispositif de remblayage à projection (9), réglable en hauteur.

# Fig.1

0 041 282

## Fig. 2

Fig. 3
(A-B)